# EUROPEAN PATENT APPLICATION

(11) **EP 2 398 260 A1**
(43) Date of publication of application: **21.12.2011**
(21) Application number: 11003164.8
(22) Date of filing: 14.04.2011
(51) Int. Cl.: H04W 4/12, H04L 12/58

(54) **Mobile terminal and method of controlling the same**

(30) Priority: 21.06.2010 KR 20100058350
(71) Applicant: LG ELECTRONICS INC., Yeongdeungpo-gu Seoul 150-721 (KR)
(72) Inventor: Choi, Younhwa, Seoul, 153-801 (KR); Lee, Jungjoon, Seoul, 153-801 (KR); Lee, Taekon, Seoul, 153-801 (KR); Jeon, Hyunjoo, Seoul, 153-801 (KR)
(74) Representative: Katérle, Axel

(57) **Abstract**

A mobile terminal and a method of controlling the same are discussed. The mobile terminal includes a touch screen, and a controller acquiring first identification information about a receiving terminal, second identification information about a social network service account, and transmission data through the touch screen and transmitting the transmission data to the receiving terminal corresponding to the first identification information and a server of the social network service account corresponding to the second identification information. Accordingly, the data can be transmitted to the receiving terminal corresponding to the first identification information and the social network service server corresponding to the second identification information to improve the ease of use.

## Description

### CROSS REFERENCE TO RELATED APPLICATIONS

This application claims the benefit of priority to Korean Patent Application No. 10-2010-0058350 filed on 21 June, 2010, which is hereby incorporated by reference.

### BACKGROUND OF THE INVENTION

### Field of the Invention

This document relates to a mobile terminal and a control method thereof and, more particularly, to a mobile terminal and a control method thereof for transmitting data to a receiving terminal and a social network service server respectively corresponding to first identification information and second identification information acquired from a user to improve the ease of use.

### Discussion of the Related Art

As the functions of terminals such as personal computers, laptop computers, cellular phones and the like are diversified, the terminals are constructed in the form of a multimedia player having multiple functions of capturing pictures or moving images, playing music, moving image files and games and receiving broadcasting programs.

Terminals can be divided into mobile terminals and stationary terminals. The mobile terminals can be classified into handheld terminals and vehicle mount terminals according to whether users can personally carry the terminals.

To support and enhance functions of a terminal, it can be considered to improve a structural part and/or a software part of the terminal.

A variety of recent terminals including mobile terminals provide more complex and various functions.

### SUMMARY OF THE INVENTION

An aspect of this document is to provide a mobile terminal and a control method thereof for transmitting data to a receiving terminal and a social network service server respectively corresponding to first identification information and second identification information acquired from a user to improve the ease of use.

### BRIEF DESCRIPTION OF THE DRAWINGS

The implementation of this document will be described in detail with reference to the following drawings in which like numerals refer to like elements.

FIG. 1 is a block diagram of a mobile terminal according to an embodiment of this document;

FIG. 2A is a front perspective view of the mobile terminal according to an embodiment of this document;

FIG. 2B is a rear perspective view of the mobile terminal according to an embodiment of this document;

FIGS. 2C and 2D illustrate forms of the mobile terminal and display screens according to various embodiments of this document;

FIG. 3 is a conceptional view for explaining a proximity depth of a proximity sensor according to an embodiment of this document;

FIG. 4 illustrates a configuration of a CDMA wireless communication system communicating with the mobile terminal shown in FIG. 1;

FIG. 5 is a flowchart illustrating the operation of the mobile terminal shown in FIG. 1 according to an embodiment of this document;

FIG. 6 is a flowchart illustrating an operation of transmitting a message based on identification information shown in FIG. 5;

FIG. 7 illustrates the operation of the mobile terminal according to the operations shown in FIGS. 5 and 6;

FIG. 8 is a signal flow diagram of the mobile terminal according to the operations shown in FIGS. 5 and 6;

FIG. 9 illustrates a state of setting an account in the mobile terminal according to the control method shown in FIG. 5;

FIGS. 10, 11 and 12 illustrate an operation of inputting identification information of a receiving part in the mobile terminal according to the control method shown in FIG. 5;

FIGS. 13, 14, 15 and 16 illustrate an operation of uploading a specific message to a social network service in the mobile terminal according to the control method shown in FIG. 5; and

FIG. 17 illustrates a state of setting whether to upload a message to a social network service for each receiving part according to an embodiment of this document.

### DETAILED DESCRIPTION

This document will now be described more fully with reference to the accompanying drawings, in which exemplary embodiments of this document are shown. This document may, however, be embodied in many different forms and should not be construed as being limited to the embodiments set forth herein; rather, there embodiments are provided so that this disclosure will be thorough and complete, and will fully convey the concept of this document to those skilled in the art.

Hereinafter, a mobile terminal relating to this document will be described below in more detail with reference to the accompanying drawings. In the following description, suffixes "module" and "unit" are given to components of the mobile terminal in consideration of only facilitation of description and do not have meanings or functions discriminated from each other.

The mobile terminal described in the specification can include a cellular phone, a smart phone, a laptop computer, a digital broadcasting terminal, personal digital assistants (PDA), a portable multimedia player (PMP), a navigation system and so on.

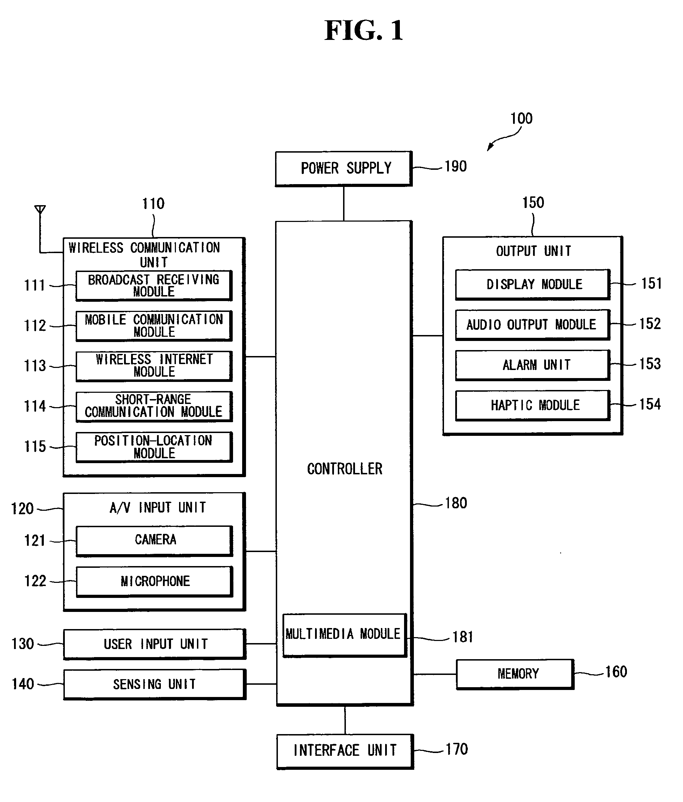

FIG. 1 is a block diagram of a mobile terminal 100 according to an embodiment of this document. Other embodiments, configurations and arrangements may also be provided. As shown, the mobile terminal 100 may include a radio communication unit 110, an audio/video (A/V) input unit 120, a user input unit 130, a sensing unit 140, an output unit 150, a memory 160, an interface 170, a controller 180, and a power supply 190. Not all of the components shown in FIG. 1 may be essential parts and the number of components included in the mobile terminal 100 may be varied. The components of the mobile terminal 100 will now be described.

The radio communication unit 110 may include at least one module that enables radio communication between the mobile terminal 100 and a radio communication system or between the mobile terminal 100 and a network in which the mobile terminal 100 is located. For example, the radio communication unit 110 may include a broadcasting receiving module 111, a mobile communication module 112, a wireless Internet module 113, a local area communication module 114, and a location (or position) information module 115.

The broadcasting receiving module 111 may receive broadcasting signals and/or broadcasting related information from an external broadcasting management server through a broadcasting channel. The broadcasting channel may include a satellite channel and a terrestrial channel, and the broadcasting management server may be a server that generates and transmits broadcasting signals and/or broadcasting related information or a server that receives previously created broadcasting signals and/or broadcasting related information and transmits the broadcasting signals and/or broadcasting related information to a terminal.

The broadcasting signals may include not only TV broadcasting signals, radio broadcasting signals, and data broadcasting signals but also signals in the form of a combination of a TV broadcasting signal and a radio broadcasting signal. The broadcasting related information may be information on a broadcasting channel, a broadcasting program or a broadcasting service provider, and may be provided even through a mobile communication network. In the latter case, the broadcasting related information may be received by the mobile communication module 112.

The broadcasting related information may exist in various forms. For example, the broadcasting related information may exist in the form of an electronic program guide (EPG) of a digital multimedia broadcasting (DMB) system or in the form of an electronic service guide (ESG) of a digital video broadcast-handheld (DVB-H) system.

The broadcasting receiving module 111 may receive broadcasting signals using various broadcasting systems. More particularly, the broadcasting receiving module 111 may receive digital broadcasting signals using digital broadcasting systems such as a digital multimedia broadcasting-terrestrial (DMB-T) system, a digital multimedia broadcasting-satellite (DMB-S) system, a media forward link only (MediaFLO) system, a DVB-H and integrated services digital broadcast-terrestrial (ISDB-T) systems. The broadcasting receiving module 111 may receive signals from broadcasting systems providing broadcasting signals other than the above-described digital broadcasting systems.

The broadcasting signals and/or broadcasting related information received through the broadcasting receiving module 111 may be stored in the memory 160. The mobile communication module 112 may transmit/receive a radio signal to/from at least one of a base station, an external terminal and a server on a mobile communication network. The radio signal may include a voice call signal, a video telephony call signal or data in various forms according to transmission and reception of text/multimedia messages.

The wireless Internet module 113 may correspond to a module for wireless Internet access and may be included in the mobile terminal 100 or may be externally attached to the mobile terminal 100. Wireless LAN (WLAN or Wi-Fi), wireless broadband (Wibro), world interoperability for microwave access (Wimax), high speed downlink packet access (HSDPA) and so on may be used as a wireless Internet technique.

The local area communication module 114 may correspond to a module for local area communication. Further, Bluetooth®, radio frequency identification (RFID), infrared data association (IrDA), ultra wideband (UWB) and/or ZigBee® may be used as a local area communication technique.

The location information module 115 may confirm or obtain the position of the mobile terminal 100. The position information module 115 may obtain position information by using a global navigation satellite system (GNSS). The GNSS is a terminology describing a radio navigation satellite system that revolves around the earth and transmits reference signals to predetermined types of radio navigation receivers such that the radio navigation receivers can determine their positions on the earth's surface or near the earth's surface. The GNSS may include a global positioning system (GPS) of the United States, Galileo of Europe, a global orbiting navigational satellite system (GLONASS) of Russia, COMPASS of China, and a quasi-zenith satellite system (QZSS) of Japan among others.

A global positioning system (GPS) module is a representative example of the location information module 115. The GPS module 115 may calculate information on distances between one point or object and at least three satellites and information on a time when the distance information is measured and apply trigonometry to the obtained distance information to obtain three-dimensional position information on the point or object according to latitude, longitude and altitude at a predetermined time.

A method of calculating position and time information using three satellites and correcting the calculated position and time information using another satellite may also be used. In addition, the GPS module 115 may continuously calculate the current position in real time and calculate velocity information using the location or position information.

As shown in FIG. 1, the A/V input unit 120 may input an audio signal or a video signal and include a camera 121 and a microphone 122. The camera 121 may process image frames of still images or moving images obtained by an image sensor in a video telephony mode or a photographing mode. The processed image frames may be displayed on a display 151 which may be a touch screen.

The image frames processed by the camera 121 may be stored in the memory 160 or may be transmitted to an external device through the radio communication unit 110. The mobile terminal 100 may also include at least two cameras 121.

The microphone 122 may receive an external audio signal in a call mode, a recording mode or a speech recognition mode and process the received audio signal into electric audio data. The audio data may then be converted into a form that can be transmitted to a mobile communication base station through the mobile communication module 112 and output in the call mode. The microphone 122 may employ various noise removal algorithms (or noise canceling algorithm) for removing or reducing noise generated when the external audio signal is received.

The user input unit 130 may receive input data for controlling operation of the mobile terminal 100 from a user. The user input unit 130 may include a keypad, a dome switch, a touch pad (constant voltage/capacitance), a jog wheel, a jog switch and so on.

The sensing unit 140 may sense a current state of the mobile terminal 100, such as an open/close state of the mobile terminal 100, a position of the mobile terminal 100, whether a user touches the mobile terminal 100, a direction of the mobile terminal 100, and acceleration/deceleration of the mobile terminal 100, and generate a sensing signal for controlling operation of the mobile terminal 100. For example, in case of a slide phone, the sensing unit 140 may sense whether the slide phone is opened or closed. Further, the sensing unit 140 may sense whether the power supply 190 supplies power and/or whether the interface 170 is connected to an external device. The sensing unit 140 may also include a proximity sensor 141.

The output unit 150 may generate visual, auditory and/or tactile output and may include the display 151, an audio output module 152, an alarm 153 and a haptic module 154. The display 151 may display information processed by the mobile terminal 100. The display 151 may display a user interface (UI) or a graphic user interface (GUI) related to a telephone call when the mobile terminal 100 is in the call mode. The display 151 may also display a captured and/or received image, a UI or a GUI when the mobile terminal 100 is in the video telephony mode or the photographing mode.

In addition, the display 151 may include at least one of a liquid crystal display, a thin film transistor liquid crystal display, an organic light-emitting diode display, a flexible display and a three-dimensional display. Some of these displays may be of a transparent type or a light transmissive type. That is, the display 151 may include a transparent display.

The transparent display may include a transparent liquid crystal display. The rear structure of the display 151 may also be of a light transmissive type. Accordingly, a user may see an object located behind the body of the mobile terminal 100 through the transparent area of the body of the mobile terminal 100 that is occupied by the display 151.

The mobile terminal 100 may also include at least two displays 151. For example, the mobile terminal 100 may include a plurality of displays 151 that are arranged on a single face at a predetermined distance or integrated displays. The plurality of displays 151 may also be arranged on different sides.

Further, when the display 151 and a sensor sensing touch (hereafter referred to as a touch sensor) form a layered structure that is referred to as a touch screen, the display 151 may be used as an input device in addition to an output device. The touch sensor may be in the form of a touch film, a touch sheet, and a touch pad, for example.

The touch sensor may convert a variation in pressure applied to a specific portion of the display 151 or a variation in capacitance generated at a specific portion of the display 151 into an electric input signal. The touch sensor may sense pressure of touch as well as position and area of the touch.

When the user applies a touch input to the touch sensor, a signal corresponding to the touch input may be transmitted to a touch controller. The touch controller may then process the signal and transmit data corresponding to the processed signal to the controller 180. Accordingly, the controller 180 may detect a touched portion of the display 151.

The proximity sensor 141 of the sensing unit 140 may be located in an internal region of the mobile terminal 100, surrounded by the touch screen, or near the touch screen. The proximity sensor 141 may sense an object approaching a predetermined sensing face or an object located near the proximity sensor using an electromagnetic force or infrared rays without having mechanical contact. The proximity sensor 141 may have a lifetime longer than a contact sensor and may thus have a wide application in the mobile terminal 100.

The proximity sensor 141 may include a transmission type photo-electric sensor, a direct reflection type photo-electric sensor, a mirror reflection type photo-electric sensor, a high-frequency oscillating proximity sensor, a capacitive proximity sensor, a magnetic proximity sensor, and/or an infrared proximity sensor. A capacitive touch screen may be constructed such that proximity of a pointer is detected through a variation in an electric field according to the proximity of the pointer. The touch screen (touch sensor) may be classified as a proximity sensor 141.

For ease of convenience of explanation, an action of the pointer approaching the touch screen without actually touching the touch screen may be referred to as a proximity touch and an action of bringing the pointer into contact with the touch screen may be referred to as a contact touch. The proximity touch point of the pointer on the touch screen may correspond to a point of the touch screen at which the pointer is perpendicular to the touch screen.

The proximity sensor 141 may sense the proximity touch and a proximity touch pattern (e.g., a proximity touch distance, a proximity touch direction, a proximity touch velocity, a proximity touch time, a proximity touch position, a proximity touch moving state, etc.). Information corresponding to the sensed proximity touch action and proximity touch pattern may then be displayed on the touch screen.

The audio output module 152 may output audio data received from the radio communication unit 110 or stored in the memory 160 in a call signal receiving mode, a telephone call mode or a recording mode, a speech recognition mode and a broadcasting receiving mode. The audio output module 152 may output audio signals related to functions, such as a call signal incoming tone and a message incoming tone, performed in the mobile terminal 100. The audio output module 152 may include a receiver, a speaker, a buzzer, and the like. The audio output module 152 may output sounds through an earphone jack. The user may hear the sounds by connecting an earphone to the earphone jack.

The alarm 153 may output a signal for indicating generation of an event of the mobile terminal 100. For example, alarms may be generated when receiving a call signal, receiving a message, inputting a key signal, or inputting touch. The alarm 153 may also output signals in forms different from video signals or audio signals, for example, a signal for indicating generation of an event through vibration. The video signals or the audio signals may also be output through the display 151 or the audio output module 152.

The haptic module 154 may generate various haptic effects that the user can feel. One example of the haptic effects is vibration. The intensity and/or pattern of vibration generated by the haptic module 154 may also be controlled. For example, different vibrations may be combined and output or may be sequentially output.

The haptic module 154 may generate a variety of haptic effects including an effect of stimulus according to an arrangement of pins vertically moving against a contact skin surface, an effect of stimulus according to a jet force or sucking force of air through a jet hole or a sucking hole, an effect of stimulus of rubbing the skin, an effect of stimulus according to contact of an electrode, an effect of stimulus using an electrostatic force, and an effect according to a reproduction of cold and warmth using an element capable of absorbing or radiating heat in addition to vibrations.

The haptic module 154 may not only transmit haptic effects through direct contact but may also allow the user to feel haptic effects through a kinesthetic sense of the user's fingers or arms. The mobile terminal 100 may also include a plurality of haptic modules 154.

The memory 160 may store a program for operation of the controller 180 and temporarily store input/output data such as a phone book, messages, still images, and/or moving images. The memory 160 may also store data about vibrations and sounds in various patterns that are output from when a touch input is applied to the touch screen.

The memory 160 may include at least a flash memory, a hard disk type memory, a multimedia card micro type memory, a card type memory, such as SD or XD memory, a random access memory (RAM), a static RAM (SRAM), a read-only memory (ROM), an electrically erasable programmable ROM (EEPROM), a programmable ROM (PROM) magnetic memory, a magnetic disk or an optical disk. The mobile terminal 100 may also operate in relation to a web storage performing the storing function of the memory 160 on the Internet.

The interface 170 may serve as a path to external devices connected to the mobile terminal 100. The interface 170 may receive data from the external devices or power and transmit the data or power to internal components of the mobile terminal 100 or transmit data of the mobile terminal 100 to the external devices. For example, the interface 170 may include a wired/wireless headset port, an external charger port, a wired/wireless data port, a memory card port, a port for connecting a device having a user identification module, an audio I/O port, a video I/O port, and/or an earphone port.

The interface 170 may also interface with a user identification module that is a chip that stores information for authenticating authority to use the mobile terminal 100. For example, the user identification module may be a user identify module (UIM), a subscriber identify module (SIM) and a universal subscriber identify module (USIM). An identification device including the user identification module may also be manufactured in the form of a smart card. Accordingly, the identification device may be connected to the mobile terminal 100 through a port of the interface 170.

The interface 170 may also be a path through which power from an external cradle is provided to the mobile terminal 100 when the mobile terminal 100 is connected to the external cradle or a path through which various command signals input by the user through the cradle are transmitted to the mobile terminal 100. The various command signals or power input from the cradle may be used as signals for confirming whether the mobile terminal 100 is correctly set in the cradle.

The controller 180 may control overall operations of the mobile terminal 100. For example, the controller 180 may perform control and processing for voice communication, data communication and/or video telephony. The controller 180 may also include a multimedia module 181 for playing multimedia. The multimedia module 181 may be included in the controller 180 as shown in FIG. 1 or may be separated from the controller 180.

The controller 180 may perform a pattern recognition process capable of recognizing handwriting input or picture-drawing input applied to the touch screen as characters or images. The power supply 190 may receive external power and internal power and provide power required for operations of the components of the mobile terminal 100 under control of the controller 180.

According to hardware implementation, embodiments of the present disclosure may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or electrical units for executing functions. The embodiments may be implemented by the controller 180.

According to software implementation, embodiments such as procedures or functions may be implemented with a separate software module executing at least one function or operation. Software codes may be implemented according to a software application written in an appropriate software language. The software codes may be stored in the memory 160 and executed by the controller 180.

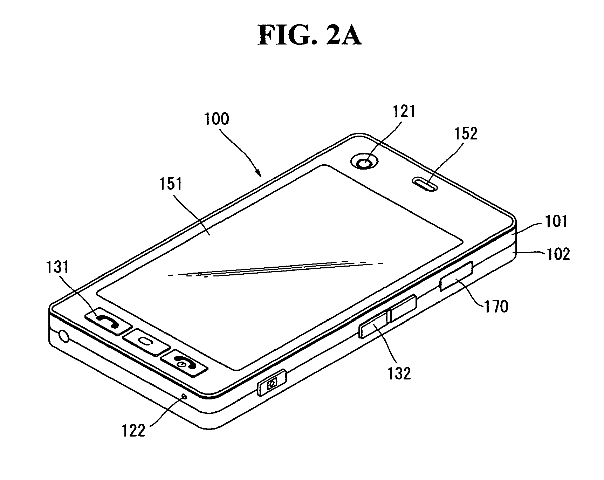

FIG. 2A is a front perspective view of a mobile terminal or a handheld terminal 100 according to an embodiment of this document.

The handheld terminal 100 has a bar type terminal body. However, this document is not limited to a bar type terminal and can be applied to terminals of various types including slide type, folder type, swing type and swivel type terminals having at least two bodies that are relatively movably combined.

The terminal body includes a case (a casing, a housing, a cover, etc.) forming the exterior of the terminal 100. In the present embodiment, the case can be divided into a front case 101 and a rear case 102. Various electronic components are arranged in the space formed between the front case 101 and the rear case 102. At least one middle case can be additionally arranged between the front case 101 and the rear case 102.

The cases can be formed of plastics through injection molding or made of a metal material such as stainless steel (STS) or titanium (Ti).

The display unit 151, the audio output unit 152, the camera 121, the user input unit 130/131 and 132, the microphone 122 and the interface 170 can be arranged in the terminal body, specifically, in the front case 101.

The display unit 151 occupies most part of the main face of the front case 101. The audio output unit 152 and the camera 121 are arranged in a region in proximity to one of both ends of the display unit 151 and the user input unit 131 and the microphone 122 are located in a region in proximity to the other end of the display unit 151. The user input unit 132 and the interface 170 are arranged on the sides of the front case 101 and the rear case 102.

The user input unit 130 is operated to receive commands for controlling the operation of the handheld terminal 100 and can include a plurality of operating units 131 and 132. The operating units 131 and 132 can be referred to as manipulating portions and employ any tactile manner in which a user operates the operating units 131 and 132 while having tactile feeling.

First and second operating units 131 and 132 can receive various inputs. For example, the first operating unit 131 receives commands such as start, end and scroll and the second operating unit 132 receives commands such as control of the volume of sound output from the audio output unit 152 or conversion of the display unit 151 to a touch recognition mode.

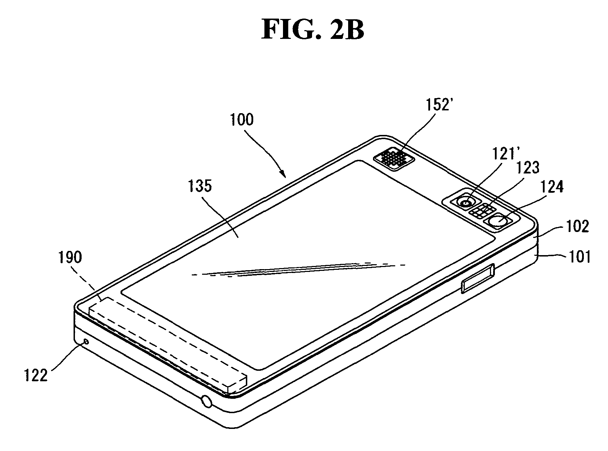

FIG. 2B is a rear perspective view of the handheld terminal shown in FIG. 2A according to an embodiment of this document.

Referring to FIG. 2A, a camera 121' can be additionally attached to the rear side of the terminal body, that is, the rear case 102. The camera 121' has a photographing direction opposite to that of the camera 121 shown in FIG. 2A and can have pixels different from those of the camera 121 shown in FIG. 2A.

For example, it is desirable that the camera 121 has low pixels such that it can capture an image of the face of a user and transmit the image to a receiving part in case of video telephony while the camera 121' has high pixels because it captures an image of a general object and does not immediately transmit the image in many cases. The cameras 121 and 121' can be attached to the terminal body such that they can be rotated or pop-up.

A flash bulb 123 and a mirror 124 are additionally arranged in proximity to the camera 121'. The flash bulb 123 lights an object when the camera 121' takes a picture of the object. The mirror 124 is used for the user to look at his/her face in the mirror when the user wants to self-photograph himself/herself using the camera 121'.

An audio output unit 152' can be additionally provided on the rear side of the terminal body. The audio output unit 152' can achieve a stereo function with the audio output unit 152 shown in FIG. 2A and be used for a speaker phone mode when the terminal is used for a telephone call.

A broadcasting signal receiving antenna can be additionally attached to the side of the terminal body in addition to an antenna for telephone calls. The antenna constructing a part of the broadcasting receiving module 111 shown in FIG. 1 can be set in the terminal body such that the antenna can be pulled out of the terminal body.

The power supply 190 for providing power to the handheld terminal 100 is set in the terminal body. The power supply 190 can be included in the terminal body or detachably attached to the terminal body.

A touch pad 135 for sensing touch can be additionally attached to the rear case 102. The touch pad 135 can be of a light transmission type as the display unit 151. In this case, if the display unit 151 outputs visual information through both sides thereof, the visual information can be recognized through the touch pad 135. The information output through both sides of the display unit 151 can be controlled by the touch pad 135. Otherwise, a display is additionally attached to the touch pad 135 such that a touch screen can be arranged even in the rear case 102.

The touch pad 135 operates in connection with the display unit 151 of the front case 101. The touch pad 135 can be located in parallel with the display unit 151 behind the display unit 151.The touch panel 135 can be identical to or smaller than the display unit 151 in size.

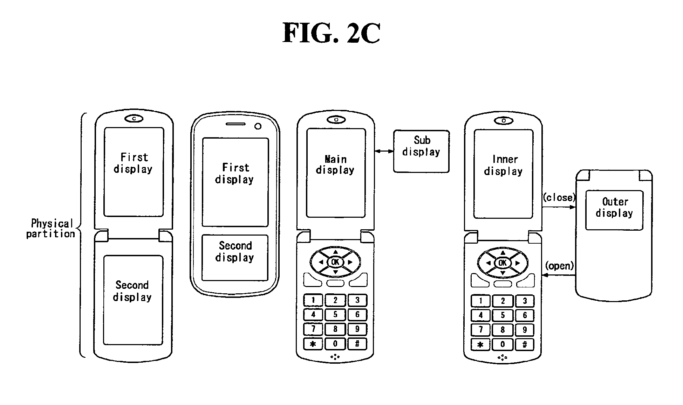

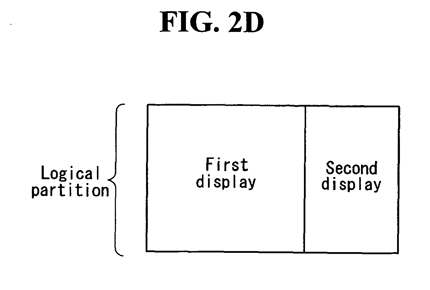

FIGS. 2C and 2D illustrate the mobile terminal 100 and the display unit 151 according to various embodiments of this document.

Referring to FIG. 2C, the display unit 151 can include a first display and a second display which are physically separated from each other. In a folder type or slide type mobile terminal having two bodies connected through a hinge or slide, the first display (or main display) can be formed on the inner face or outer face of one of the bodies and the second display (or sub display) can be formed on the inner face or outer face of the other body. The sub display is separated from the mobile terminal and detachably combined with the mobile terminal body through an interface to display data from the mobile terminal 100.

The display unit 151 can include first and second displays which are logically separated from each other in a display panel, as illustrated in FIG. 2D.

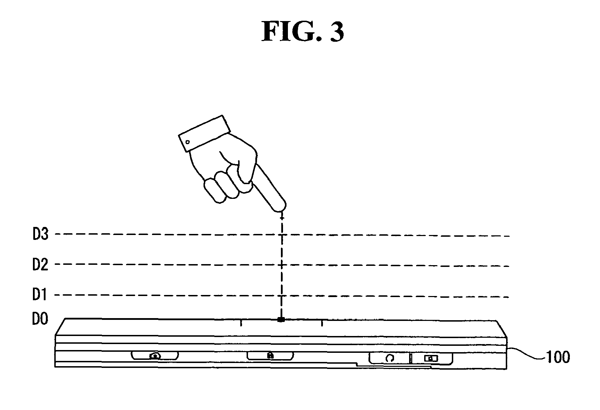

FIG. 3 is a conceptional view for explaining a proximity depth of the proximity sensor.

As shown in FIG. 3, when a pointer such as a user's finger approaches the touch screen, the proximity sensor located inside or near the touch screen senses the approach and outputs a proximity signal.

The proximity sensor can be constructed such that it outputs a proximity signal according to the distance between the pointer approaching the touch screen and the touch screen (referred to as "proximity depth").

The distance in which the proximity signal is output when the pointer approaches the touch screen is referred to as a detection distance. The proximity depth can be known by using a plurality of proximity sensors having different detection distances and comparing proximity signals respectively output from the proximity sensors.

FIG. 3 shows the section of the touch screen in which proximity sensors capable of sensing three proximity depths are arranged. Proximity sensors capable of sensing less than three or more than four proximity depths can be arranged in the touch screen.

Specifically, when the pointer completely comes into contact with the touch screen (D0), it is recognized as contact touch. When the pointer is located within a distance D1 from the touch screen, it is recognized as proximity touch of a first proximity depth. When the pointer is located in a range between the distance D1 and a distance D2 from the touch screen, it is recognized as proximity touch of a second proximity depth. When the pointer is located in a range between the distance D2 and a distance D3 from the touch screen, it is recognized as proximity touch of a third proximity depth. When the pointer is located at longer than the distance D3 from the touch screen, it is recognized as cancellation of proximity touch.

Accordingly, the controller 180 can recognize the proximity touch as various input signals according to the proximity distance and proximity position of the pointer with respect to the touch screen and perform various operation controls according to the input signals.

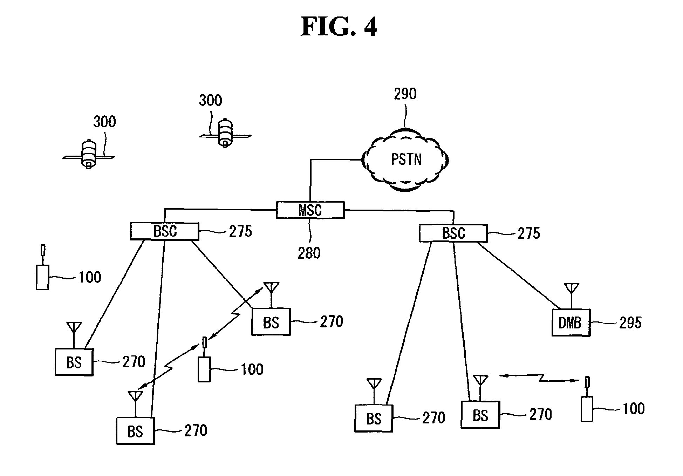

Referring to FIG. 4, a CDMA wireless communication system includes mobile terminals 100, base stations 270, base station controllers 275, and a mobile switching center 280. The mobile switching center 280 is connected to a public switch telephone network (PSTN) 290. The mobile switching center 280 is connected to the base station controllers 275. The base station controllers 275 are connected to the base stations 270 through backhaul lines. The backhaul lines may be constructed according to E1/T1, ATM, IP, PPP, frame relay, HDSL, ADSL or xDSL well-known in the art. The CDMA wireless communication system may include at least two base station controllers 275.

Each base station 270 may include a sector or sectors and each sector may include an omnidirectional antenna or an antenna adjusted to a specific radiation direction from the base station 270. Otherwise, each sector may include two diversity reception antennas. Each base station 270 is constructed to have frequency assignments, and the frequency assignments may have specific spectra (for example, 1.25MHz and 5MHz).

Intersection of sectors and frequency assignments may be referred to a CDMA channel.

The base stations 270 may be referred to as base station transceiver subsystems (BTSs). "Base station" may be used as a term that collectively designates the base station controller 275 and one or more base stations 270 in several examples. Furthermore, the base stations 270 may be referred to as "cell sites". Otherwise, individual sectors of a given base station 270 may be referred to as cell sites.

A terrestrial DMB transmitter 295 can transmit broadcasting signals to the mobile terminals 100 operating in the CDMA wireless communication system. The broadcasting receiving module 111 of each mobile terminal 100 is constructed to receive the broadcasting signals transmitted from the DMB transmitter 295. This can be similarly applied to different types of broadcast and multicast signaling as described above.

FIG. 4 illustrates global positioning system (GPS) satellites 300. These satellites 300 can track the positions of some or all of the mobile terminals 100. Although two satellites are shown in FIG. 4, position information can be obtained from less than or more than two satellites. In addition, other position-tracking techniques (for example, position-tracking techniques that can substitute for GPS technique or can be added to the GPS technique) can be used. If required, some or all of the GPS satellites 300 can support satellite DMB transmission separately or additionally.

When the CDMA wireless communication system operates, the base stations 270 receive reverse link signals from the mobile terminals 100. The mobile terminals 100 may be in a state that the mobile terminals 100 are making calls, sending messages or performing other communications. The reverse link signals received by the base stations 270 are processed by the base stations 270. The processed data is transmitted to the base station controllers 275 connected to the base stations 270. The base station controllers 275 provide call resource allocation and mobility management functionality including soft handoffs between the base stations 270. Furthermore, the base station controllers 275 transmit the received data to the mobile switching center 280. The mobile switching center 280 provides additional routing services for interfacing with the PSTN 290. Similarly, the PSTN 290 interfaces with the mobile switching center 280, and the mobile switching center 280 interfaces with the base station controllers 275. The base station controllers 275 control the base stations 270 to transmit forward link signals to the mobile terminals 100.

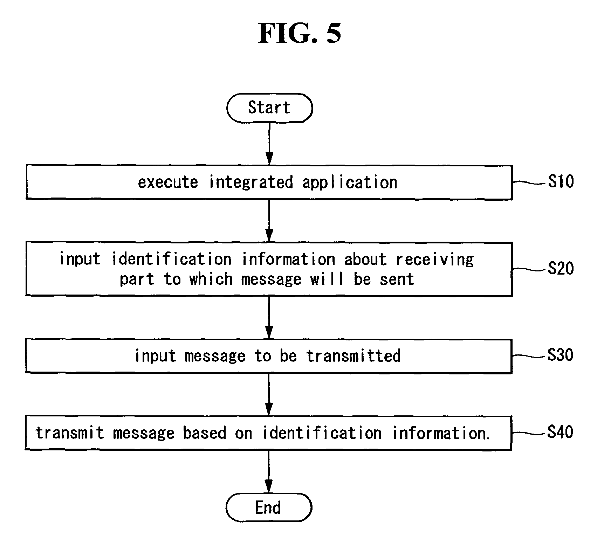

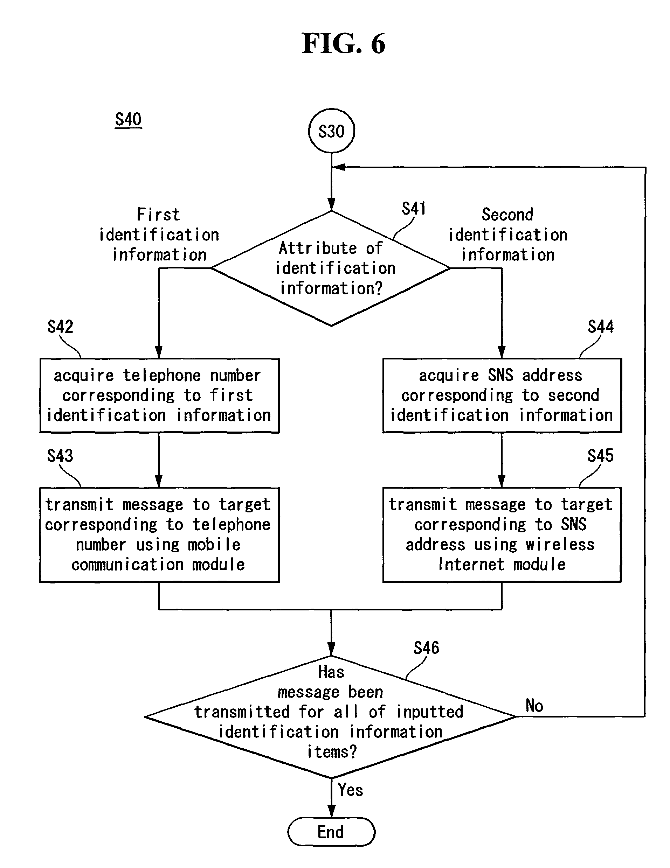

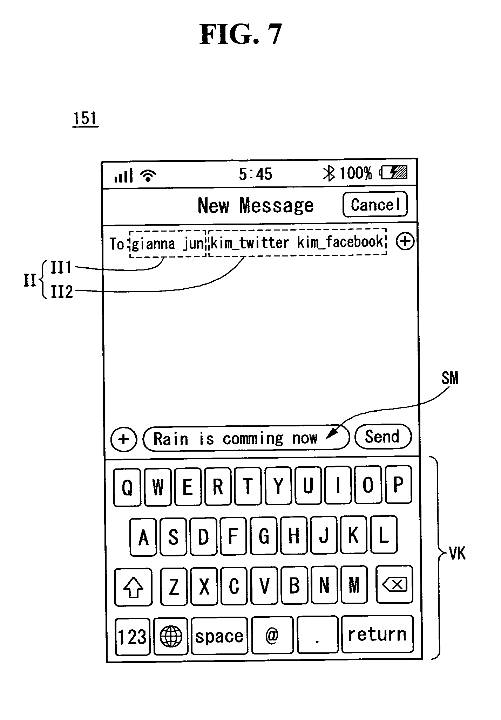

FIG. 5 is a flowchart illustrating the operation of the mobile terminal 100 according to an embodiment of this document and FIG. 6 is a flowchart illustrating an operation S40 of transmitting a message based on identification information, shown in FIG. 5. FIG. 7 illustrates the operation of the mobile terminal 100 according to the operations shown in FIGS. 5 and 6 and FIG. 8 is a signal flow diagram of the mobile terminal 100 according to the operations shown in FIGS. 5 and 6.

Referring to FIGS. 5, 6, 7 and 8, the controller (e.g., 180 shown in FIG. 1) of the mobile terminal 100 may execute an integrated application in operation S10.

The integrated application may mean an application by which the user of the mobile terminal 100 can transmit a message SM through multiple routes. For example, the integrated application can transmit the message SM to a receiving part and, simultaneously, upload the message SM to various social network services when the user inputs the message SM once. The mobile terminal 100 can provide the integrated application in the form of a menu or an icon to the user.

Identification information II of the receiving part to which the message SM will be transmitted may be inputted to the mobile terminal 100 in operation S20.

The identification information II can be information that can discriminate a specific person from other persons. The identification information II may correspond to a combination of numerals, a combination of characters, a combination of signs, or a combination of some of numerals, characters and signs. The identification information II can be considered to be an address because the identification information II discriminates a specific person from other persons. The identification information II may be divided into first identification information II1 and second identification information II2 according to attribute. The first identification information II1 may be a telephone number and the second identification information II2 may be information about a social network service account. That is, the second identification information II2 can be ID that can access a specific social network service and the memory (e.g., 160 shown in FIG. 1) can store a password relating to the ID. Accordingly, the controller (e.g., 180 shown in FIG. 1) can acquire the ID and password corresponding to the second identification information II2 from the memory (e.g., 160 shown in FIG. 1) when the second identification information II2 is inputted.

If the message SM is transmitted based on the first identification information II1, the message SM can be transmitted through the mobile communication module (e.g., 112 shown in FIG. 1). That is, the message SM in the form of SMS or MMS can be transmitted to the specific receiving part through a mobile communication network. Since the message SM is transmitted to the specific receiving part through the mobile communication network, the first identification information II1 can be a telephone number corresponding to the receiving part.

If the message SM is transmitted based on the second identification information II2, the message SM can be transmitted through the wireless Internet module (e.g., 113 shown in FIG. 1). That is, the message SM can be transmitted to a server 1000 that provides a social network service through wireless Internet. The social network service server 1000 can upload the second identification information II2 when receiving the message SM from the mobile terminal 100.

The first identification information II1 and the second identification information II2 can be inputted by the user. That is, the user can select a target to which the user wants to send the message SM. When the first identification information II1 and the second identification information II2 are inputted in the integrated application, the message SM is transmitted to a destination that the user wants so that the ease of use can be improved. For example, the user does not need to execute a message application to transmit the message SM based on the first identification information II1 and then execute a social network service application to transmit the message SM based on the second identification information II2.

The message SM to be transmitted may be inputted in operation S30. The inputted message SM can be transmitted to a terminal of the receiving part through the mobile communication network (e.g., 112 shown in FIG. 1) or uploaded to the social network service server 1000 through the wireless Internet. The message SM may be composed of only characters, only images, or characters and images.

The message SM may be transmitted according to the identification information II in operation S40.

Multiple identification information items may be inputted and stored in the mobile terminal 100. Accordingly, the controller (e.g., 180 shown in FIG. 1) can transmit the message SM to a destination corresponding to the attribute of the input identification information II.

Referring to FIG. 6, the operation S40 of transmitting the message SM based on the identification information II may include an operation S41 of determining the attribute of the identification information II.

The attribute of the identification information II can be a standard for determining how data corresponding to the inputted identification information will be transmitted. For example, the attribute of the identification information II represents whether the inputted identification information II is a telephone number or a specific social network service ID.

If the attribute of the identification information II corresponds to the first identification information II1, the controller (e.g., 180 shown in FIG. 1) may acquire a telephone number corresponding to the first identification information II1 in operation S42.

When the first identification information II1 is inputted, the user may input a representative name instead of the telephone number. For example, the user can input a name 'Kim' instead of a combination of numerals such as 0101234567 as the first identification information II1. In this case, the controller (e.g., 180 shown in FIG. 1) can acquire the telephone number corresponding to the inputted name from the memory (e.g., 160 shown in FIG. 1).

When the telephone number corresponding to the first identification information II1 is acquired, the message SM may be transmitted to the receiving part corresponding to the telephone number through the mobile communication module (e.g., 112 shown in FIG. 1) in operation S43.

If the attribute of the identification information II corresponds to the second identification information II2, a social network service address corresponding to the second identification information II2 may be acquired in operation S44.

The second identification information II2 may be a representative name of a specific social network service address. In the case of 'facebook', one of social network services, a name 'kim_facebook' instead of an email account used to log in 'facebook' can be used as the second identification information II2. Accordingly, when the representative name is inputted as the second identification information II2, the controller (e.g., 180 shown in FIG. 1) can acquire the address corresponding to the representative name from the memory (e.g., 160 shown in FIG. 1).

When the social network service address is acquired, the message SM may be transmitted to the corresponding social network service server 1000 through the wireless Internet module (e.g., 113 shown in FIG. 1) in operation S45.

Then, it is determined whether the message SM has been transmitted for all the inputted identification information in operation S46.

Multiple identification information items may be inputted to the mobile terminal 100. Furthermore, there may be multiple first identification information items and multiple second identification information items. Accordingly, the controller (e.g., 180 shown in FIG. 1) can determine whether the message SM has been transmitted to destinations respectively corresponding to all the identification information items and repeat the operation of transmitting the message SM to a destination corresponding to each identification information if the message SM has not been transmitted to the destinations corresponding to all the identification information items.

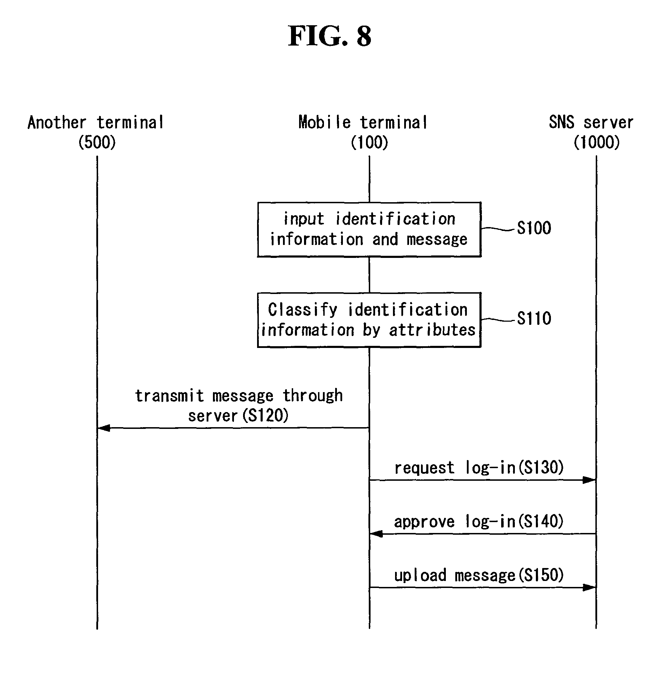

Referring to FIG. 8, the mobile terminal 100 can transmit/receive signals to another terminal 500 and the social network service server 1000.

When the mobile terminal 100 receives the identification information II and the message SM in operation S100, the identification information II can be classified by attributes in operation S110.

The message SM can be transmitted to the other terminal 500 according to its attribute through a relay server in operation S120. If the message SM is required to be transmitted to the social network service server 1000, account information corresponding to the identification information II may be transmitted to the social network service server 1000 to request for log-in in operation S 130. When the social network service server 1000 approves the log-in in operation S 140, the message SM can be uploaded to the social network service server 1000. The operations S120 and S150 can be simultaneously performed. That is, the controller (e.g., 180 shown in FIG. 1) can perform the operations S120 and S 150 having a minimum delay between them although states of the controller (e.g., 180 shown in FIG. 1), the other terminal 100 and the social network service server 1000 can generate a delay between the operations S120 and S 150. Considering that a long time is required to transmit a text message and to upload the text message to a social network service server by respectively using separate applications, it can be considered that the mobile terminal 100 performs transmission of the message and uploading of the message substantially simultaneously.

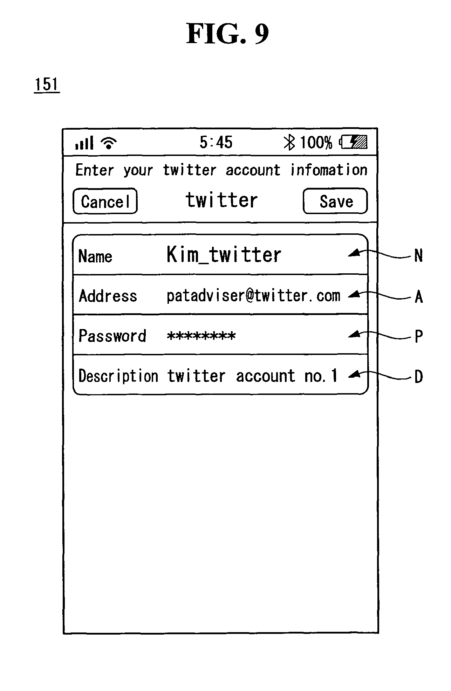

FIG. 9 illustrates setting of an account in the mobile terminal 100 in the operation shown in FIG. 5.

Referring to FIG. 9, the controller (e.g., 180 shown in FIG. 1) of the mobile terminal 100 may provide a screen for setting an account through the touch screen 151.

Setting an account corresponding to the second identification information II2 may correspond to an operation of inputting a representative name N, an account address A, a password P and description D with respect to the account. Once the account has been set, the user can input only the representative name N, which is relatively easy to remember, to send the message SM to a desired receiving part without having the hassle of inputting the address A and description D of the account. When the set account corresponds to Twitter, one of social network services, as shown in FIG. 9, information on the set account can be the account information of the user of the mobile terminal 100. Twitter can distribute a text uploaded to its account to followers of the account by introducing a follower concept. Accordingly, when the user previously inputs his/her account information, the user can transmit the specific message SM to a specific receiving part through the mobile communication module (e.g., 112 shown in FIG. 1) and, simultaneously, share the message SM with his/her followers.

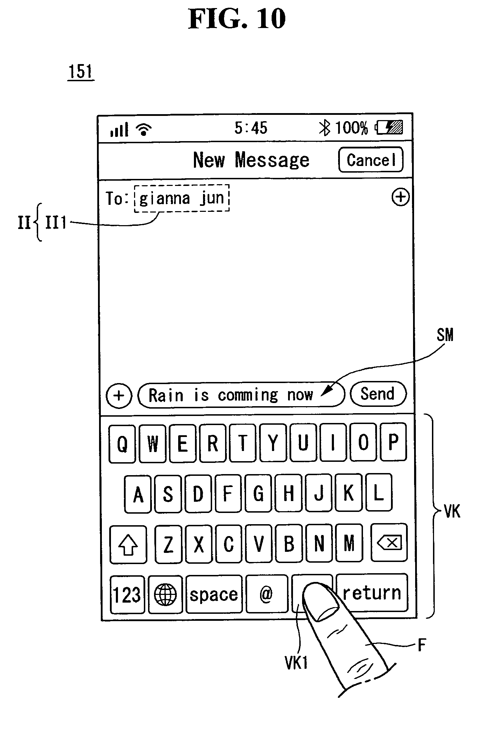

FIGS. 10, 11 and 12 illustrate the operation of inputting identification information of the receiving part in the mobile terminal 100, shown in FIG. 5.

The controller (e.g., 180 shown in FIG. 1) of the mobile terminal 100 may easily select a target to which the inputted message SM will be sent.

As shown in FIG. 10, the user can generate the message SM to be sent by using virtual keys VK displayed on the touch screen 151. In addition, the user can input the first identification information II1 about the receiving part to which the message SM will be sent. That is, it can be known from FIG. 10 that the user of the mobile terminal 100 is trying to transmit a message 'Rain is coming now' to Gianna Jun.

The user can touch a first virtual key VK1 with a finger F. The touch applied to the first virtual key VK1 may be a touch operation different from a touch operation for executing the original function given to the first virtual key VK1. For example, the touch applied to the first virtual key VK1 can be an operation of touching the first virtual key VK1 longer.

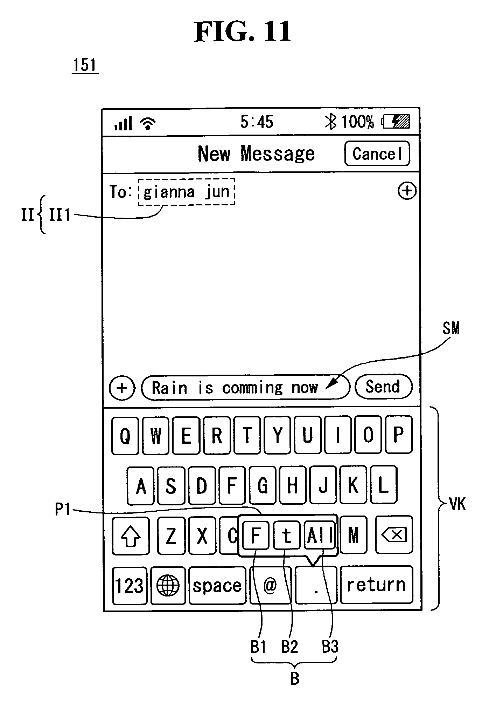

Referring to FIG. 11, when the user touches the first virtual key VK1 longer, the controller (e.g., 180 shown in FIG. 1) can display a first pop-up window P1 for selecting a social network service to which the message SM will be sent on the touch screen 151. The first pop-up window P1 may include first, second and third buttons B1, B2 and B3. The first, second and third buttons B1, B2 and b3 may include buttons B1 and B2 respectively corresponding to specific social network services and a button B3 for selectively selecting all the registered social network services at a lump.

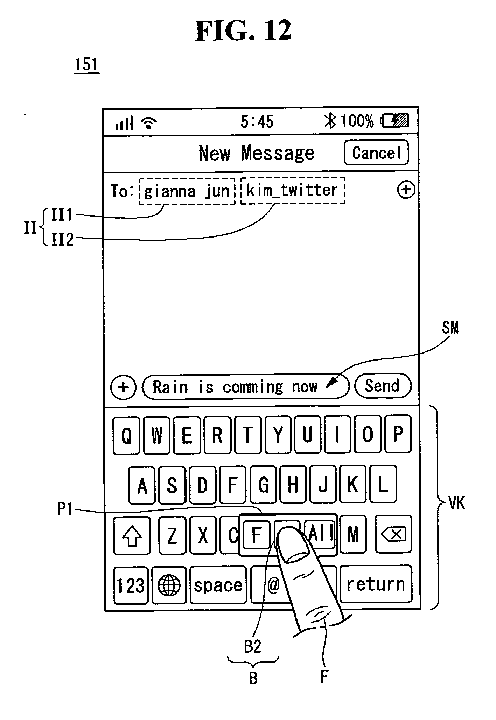

Referring to FIG. 12, the user can select a specific social network service to which the message SM will be sent using the finger F. If the user selects the second button B2 corresponding to Twitter, for example, the second identification information II2 can be inputted. Since the first identification information II1 about the specific receiving part and the second identification information II2 about the social network service have been inputted, the controller (e.g., 180 shown in FIG. 1) can transmit the message SM through two routes. That is, the controller (e.g., 180 shown in FIG. 1) can send the message SM to the receiving part corresponding to the first identification information II1 through the mobile communication module (e.g., 112 shown in FIG. 1) and, simultaneously, transmit the message SM to the social network service server corresponding to the second identification information II2 through the wireless Internet module (e.g., 113 shown in FIG. 1).

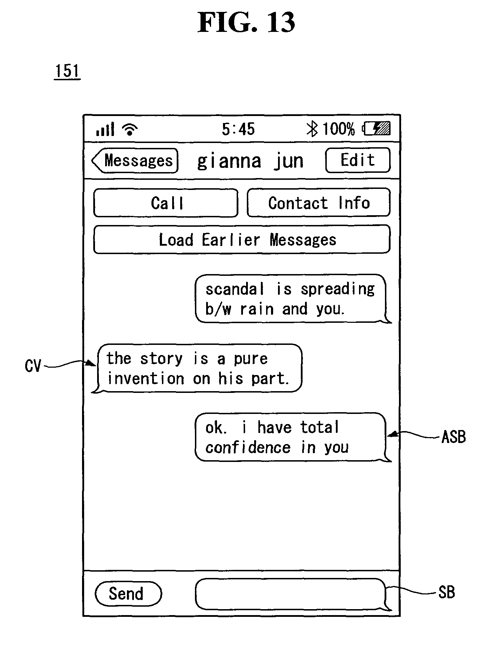

FIGS. 13, 14, 15 and 16 illustrate an operation of uploading a specific message to a social network service from the mobile terminal 100 in the operation shown in FIG. 5.

The controller (e.g., 180 shown in FIG. 1) of the mobile terminal 100 can selectively transmit messages displayed on the touch screen 151.

Referring to FIG. 13, messages transmitted/received between the user of the mobile terminal 100 and receiving parts may be displayed on the touch screen 151. These messages can be displayed in the form of thread view or conversation view in which received messages and transmitted messages are aligned in chronological order and transmitting/receiving order. For example, a received message CV and transmitted messages ASB, generated by the user of the mobile terminal 100 after the received message CV is received, can be arranged in chronological order. Furthermore, the received message CV can be arranged on the left of the touch screen 151 and the transmitted messages ASB can be arranged on the right of the touch screen 151.

A transmitted message input window SB can be displayed on the touch screen 151 in the same form as the thread view form in which the transmitted messages ASB are arranged. That is, the transmitted message input window SB can be arranged on the right of the touch screen 151 and displayed in the form of a tooltip. By doing so, an intuitive and consistent input environment can be provided.

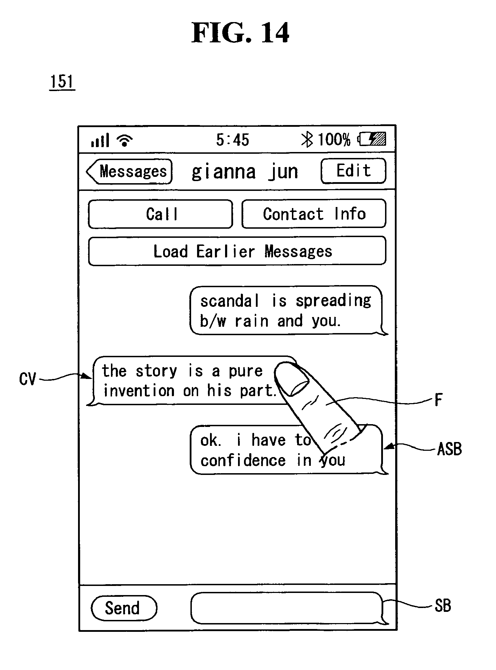

Referring to FIG. 14, the user can select a specific message using a finger F. Though one of received messages CV is selected in the following description, the user can select any of the received messages and transmitted messages. In addition, although part of messages transmitted/received between the user of the mobile terminal 100 and receiving parts has been selected in the above description, contents that can be uploaded to social network service services are not limited thereto.

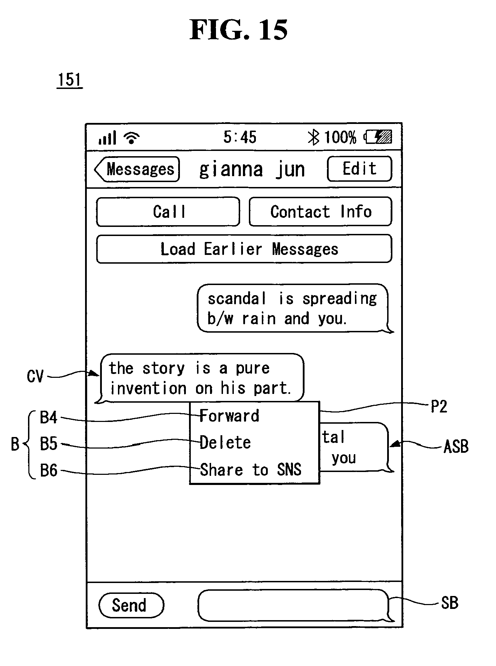

Referring to FIG. 15, when the user touches the received message CV to select the received message CV, a second pop-up window P2 can be displayed on the touch screen 151. The user can select a function relating to the selected message CV through the second pop-up window P2. That is, the second pop-up window P2 includes fourth, fifth and sixth buttons B4, B5 and B6 for executing specific functions. The sixth button B6 may be used to transmit a message to a social network service server.

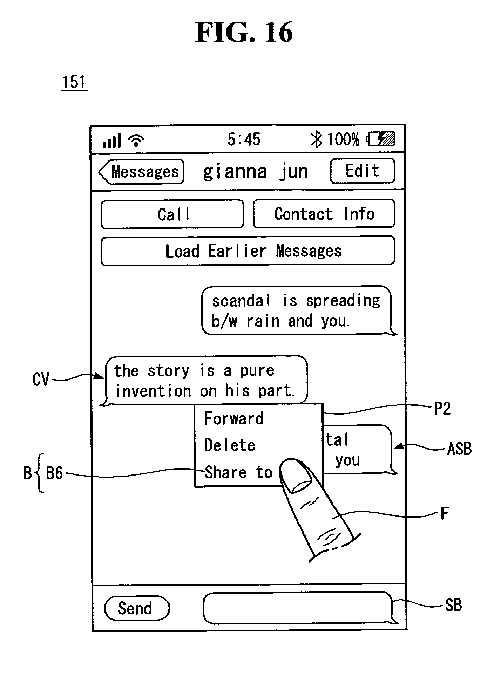

Referring to FIG. 16, the user can touch the sixth button B6 to upload the selected message CV to the social network service server. Here, the social network service server may be previously selected by the user. That is, when the user selects an upload object, the message can be uploaded to the previously specified social network service server.

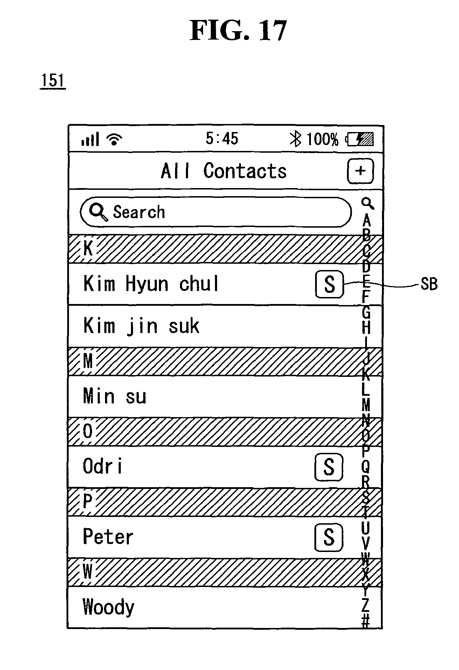

Referring to FIG. 17, the user can previously set whether or not to transmit contents generated between the user and a specific receiving part to the social network service server. If the user transmits/receives messages to/from a receiving part called Odri, for example, the user can set uploading the contents of the messages to a registered social network service. When the user selects a receiving part, an icon SB is attached to the name of the receiving part. Furthermore, when the user cancels the setting, the display of the icon SB can be cancelled. Accordingly, the user of the mobile terminal 100 can be intuitively aware of whether or not the specific receiving part is selected.

The above-described method of controlling the mobile terminal may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, or optical data storage devices. The computer readable recording medium may also be distributed over network coupled computer systems so that the computer readable code is stored and executed in a distribution fashion.

A mobile terminal may include a first touch screen configured to display a first object, a second touch screen configured to display a second object, and a controller configured to receive a first touch input applied to the first object and to link the first object to a function corresponding to the second object when receiving a second touch input applied to the second object while the first touch input is maintained.

A method may be provided of controlling a mobile terminal that includes displaying a first object on the first touch screen, displaying a second object on the second touch screen, receiving a first touch input applied to the first object, and linking the first object to a function corresponding to the second object when a second touch input applied to the second object is received while the first touch input is maintained.

Any reference in this specification to "one embodiment," "an embodiment," "example embodiment," etc., means that a particular feature, structure, or characteristic described in connection with the embodiment is included in at least one embodiment of this document. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal, comprising:
a touch screen; and
a controller operatively connected to the touch screen and configured to
acquire first identification information about a receiving terminal, second identification information about a social network service account, and transmission data through the touch screen, and
transmit the transmission data to the receiving terminal corresponding to the first identification information and a server of the social network service account corresponding to the second identification information.

2. The mobile terminal of claim 1, wherein the controller is configured to transmit the transmission data to the receiving terminal and the social network service server substantially simultaneously.

3. The mobile terminal of claim 1, wherein the controller is configured to transmit the transmission data in a single application.

4. The mobile terminal of claim 1, wherein the controller is configured to acquire a telephone number corresponding to the first identification information and an ID and a password corresponding to the second identification information from a memory of the mobile terminal.

5. The mobile terminal of claim 1, wherein the controller is configured to display an input window through which the social network service account can be selected via a touch input applied to the touch screen.

6. The mobile terminal of claim 1,
wherein the controller is configured to display messages transmitted/received to/from another terminal on the touch screen, and
wherein, when a signal for selecting one of the messages is received, the controller is further configured to set the selected message corresponding as the transmission data.

7. The mobile terminal of claim 1, further comprising:
a radio communication unit including a mobile communication module and a wireless Internet module,
wherein the controller operatively connected to the radio communication unit and configured to transmit the transmission data to the receiving terminal corresponding to the first identification
information via the mobile communication module and to a social network service server corresponding to the second identification information simultaneously.

8. The mobile terminal of claim 7,
wherein the controller is configured to display messages transmitted/received to/from another terminal on the touch screen, and
wherein, when a signal for selecting one of the messages is received, the controller is further configured to set the selected message as the transmission data.

9. The mobile terminal of claim 1, further comprising:
a radio communication unit including a mobile communication module and a wireless Internet module,
wherein the first identification information including a text message transmission address and the second identification information including a social network service address,
wherein the controller operatively connected to the radio communication unit and configured to
send the transmission data to the receiving terminal corresponding to the text message transmission address, and
simultaneously upload the transmission data to a web site corresponding to a social network service address.

10. A method of controlling a mobile terminal, the method comprising:
receiving, by the mobile terminal, first identification information about a receiving terminal and second identification information about a social network service server;
receiving, by the mobile terminal, transmission data; and
transmitting the transmission data from the mobile terminal to the receiving terminal corresponding to the first identification information and the social network service server corresponding to the second identification information.

11. The method of claim 10, wherein the step of transmitting the transmission data comprises:
transmitting the transmission data to the receiving terminal and the social network service server substantially simultaneously.

12. The method of claim 10, wherein the step of transmitting the transmission data is performed in a single application.

13. The method of claim 10, further comprising:
acquiring, by the mobile terminal, a telephone number corresponding to the first identification information and an ID and a password corresponding to the second identification information from a memory of the mobile terminal.

14. The method of claim 10, further comprising:
displaying, on the mobile terminal, an input window through which the social network service account can be selected via a touch input applied to a touch screen of the mobile terminal.

15. The method of claim 10, further comprising:
displaying, on a touch screen of the mobile terminal, messages transmitted/received to/from another terminal, and
when a signal for selecting one of the messages is received, setting the selected message corresponding as the transmission data.
